# EUROPEAN PATENT SPECIFICATION

(11) **EP 2 731 826 B1**
(45) Date of publication and mention of the grant of the patent: **29.04.2020**
(21) Application number: 12759197.2
(22) Date of filing: 11.07.2012
(51) Int. Cl.: F21S 45/48, B60Q 1/26

(54) **REAR AUTOMOTIVE LIGHT**
KRAFTFAHRZEUGRÜCKLICHT
FEU ARRIÈRE D'AUTOMOBILE

(30) Priority: 11.07.2011 IT TV20110099
(43) Date of publication of application: 21.05.2014
(73) Proprietor: Automotive Lighting Polska Sp. z o.o., 41-200 Sosnowiec (PL)
(72) Inventor: DENEKA, Marek, 41-200 Sosnowiec (PL); GALEZIOWSKI, Konrad, 41-200 Sosnowiec (PL); WOJTUSIK, Jacek, 41-200 Sosnowiec (PL)
(74) Representative: Bellemo, Matteo
(86) International application number: PCT/IB2012/053548
(87) International publication number: WO 2013/008193

(56) References cited:
- EP-A1- 2 149 748
- EP-A1- 2 278 212
- DE-A1-102007 059 009
- JP-A- 2001 010 403
- JP-A- 2009 158 312

## Description

### TECHNICAL FIELD

The present invention relates to a rear automotive light.

More in detail, the present invention relates to a rear light for cars, use to which the following description refers purely by way of example without this implying any loss of generality.

### BACKGROUND ART

As is known rear lights of cars usually consist of a substantially basin-shaped, rigid rear body, which is structured so as to stably recessed in a compartment specifically made in the rear part of the vehicle body; of a front lenticular half-shell, which is at least partially made of transparent or semitransparent plastic material, usually possibly colored, and is arranged to close the mouth of the body so as to surface on the outside of the vehicle body; of one or more cup-shaped reflector bodies with an approximately parabolic profile, each of which has a mirror-finished inner surface and is positioned within the rear shell with its mouth facing a corresponding transparent or semitransparent portion of the front lenticular half-shell; and of a series of incandescent lamps, each of which is arranged within a corresponding cup-shaped body, close to the bottom thereof, so as to backlight the transparent or semitransparent portion of the front lenticular half-shell directly above the cup-shaped reflector body itself.

Furthermore, over the past years, rear automotive lights have been increasingly integrated in the outer profile of the vehicle body, up to envelop the two edges of the body which join the rear part of the vehicle body with the two lateral sides thereof.

Obviously, the considerable integration of the outer profile of the vehicle body has implied the adoption of lenticular half-shells with particularly complex three-dimensional shapes and the drastic reduction of the working space needed to accommodate the cup-shaped reflector bodies inside the shell.

In order to at least partially obviate this drawback, most rear automotive light manufacturers have decided to replace some of the cup-shaped reflector bodies and the corresponding incandescent lamps with light emitting diode arrays, traditionally referred to as LEDs. LEDs are indeed much smaller in size than the traditional incandescent lamps for automotive purposes, and allow to make relatively thin flat light sources which exactly mimic the shape of the transparent or semitransparent portions of the half-shell to be backlighted, and may be positioned immediately underneath the front lenticular half-shell of the rear light locally following its profile.

Regretfully, the arrangement of LEDs in the rear light has created new problems. The interior of the rear light is indeed a small, closed space where relatively high temperatures can be reached due to the large amount of heat produced by the incandescent lamps, while LEDs are electronic components which are highly heat responsive and which break/burn out beyond repair in case of excessive overheating.

In front automotive lights, traditionally referred to as headlights or headlamps, the heat produced by incandescent or gas discharge lamps is usually very high, whereby cooling the LEDs is crucial and generally ensured by a number of large-sized heat sinks made of metal material, which are arranged directly on the bases supporting the LEDs and are touched by a flow of cold air produced by a small cooling fan arranged within the shell of the headlight. Furthermore, protective partitions made of heat-insulating material are usually arranged between reflector bodies and LED bases and are structured so as to limit the heat transfer from the lamps to the bases by convection and/or radiation.

Regretfully, rear automotive lights have an insufficient inner volume to accommodate and ensure the correct operation of the forced-air, LED cooling systems used in automotive headlights. Furthermore, forced-air cooling systems are too costly to be integrated in a rear automotive light.

Document EP 2 278 212 A1 discloses a rear automotive light according to the preamble of claim 1.

### DISCLOSURE OF INVENTION

Aim of the present invention is to ensure the correct cooling of LEDs in a rear automotive light, without significantly increasing the light production costs.

In compliance with these aims, according to the present invention there is provided a rear automotive light as specified in claim 1 and preferably, though not necessarily in any one of the dependent claims.

### BRIEF DESCRIPTION OF THE DRAWINGS

The present invention will now be described with reference to the accompanying drawings, which show a non-limitative embodiment thereof, in which:
- figure 1 shows in an exploded perspective view, with parts removed for clarity, an automobile rear light realized according to the teachings of the present invention;
- figure 2 is a section view of the rear automotive light shown in figure 1, with parts removed for clarity; whereas
- figures 3 and 4 are two perspective views of a component of the automotive light in figure 1.

### BEST MODE FOR CARRYING OUT THE INVENTION

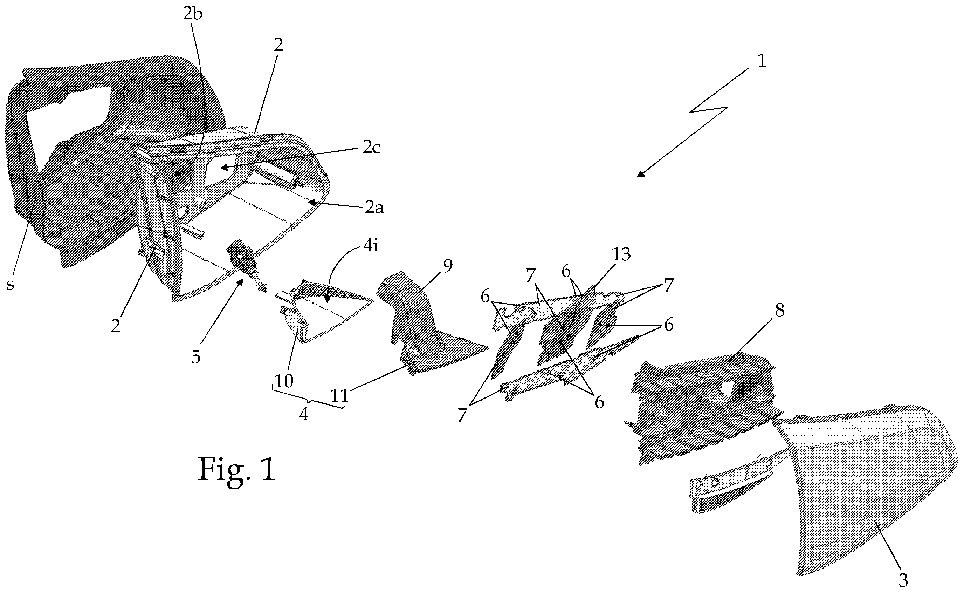

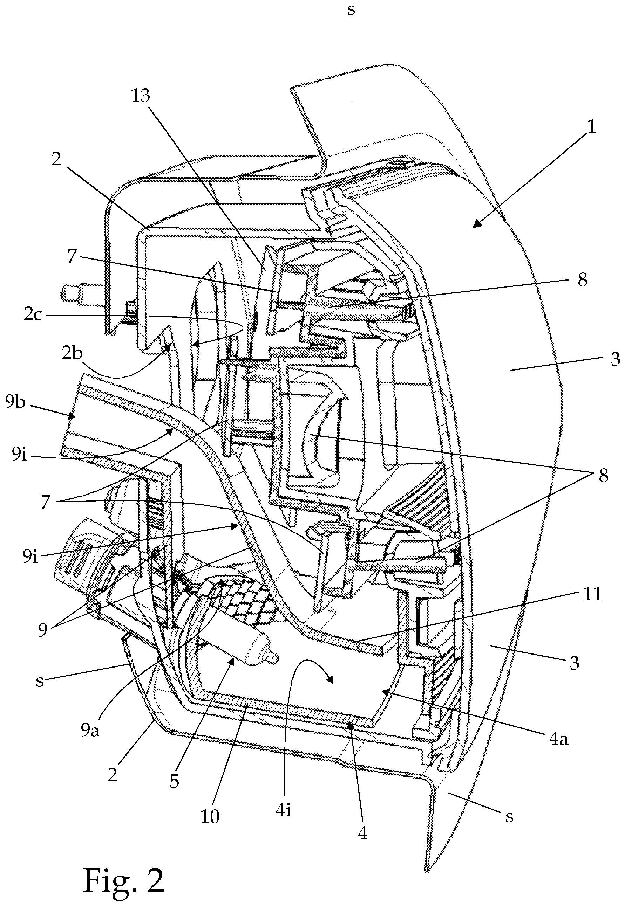

With reference to figures 1 and 2, numeral 1 indicates as a whole an automotive light particularly adapted to be fixed to the rear part of the body of a car, motorcycle or the like, i.e. a rear automotive light.

More in detail, in the example shown, the automotive light 1 is preferably, though not necessarily structured so as to be recessed in the rear part of a car, and comprises:
- a substantially basin-shaped, rigid rear shell 2, which is structured so as to be recessed into a compartment specifically made in the rear part of the vehicle body s;
- a front lenticular half-shell 3, which is provided with at least one portion made of transparent or semitransparent, possibly colored, material and is arranged to close the mouth 2a of the rear shell 2, preferably, though not necessarily to surface on the outside of the vehicle body s at the same time; and
- at least one cup-shaped reflector body 4, which is arranged inside the rear shell 2 with its mouth 4a facing a corresponding transparent or semitransparent portion of the front lenticular half-shell 3; and
- a corresponding incandescent lamp 5 or the like, which is structured so as to emit light when electricity powered, and is arranged within the cup-shaped body 4, close to the bottom thereof, so as to backlight the transparent or semitransparent portion of the front lenticular half-shell 3 which is aligned with the mouth 4a of the cup-shaped body 4.

Obviously, in a different embodiment, the rear shell 2 may be structured in order to be simply fixed so as to protrude from the rear part of the vehicle body.

In the example shown, in particular, the rear shell 2 is preferably made of an opaque plastic material by means of an injection molding process; while the front lenticular half-shell 3 is preferably, though not necessarily made of a transparent or semitransparent plastic material, possibly with transparent or semitransparent portions of different color, also in this case preferably by means of an injection molding process.

On the other hand, with regards to the cup-shaped reflector body 4, the inner surface 4i of the cup-shaped reflector body 4 is preferably metallized or otherwise mirror-finished, so as to reflect the light produced by the lamp 5 towards the transparent or semitransparent portion of the lenticular half-shell 3 which is arranged over the mouths 4a of the cup-shaped body 4.

Furthermore, the cup-shaped reflector body 4 preferably has a substantially parabolic profile, so that the light rays which are reflected by the inner surface 4i of the cup-shaped body 4 towards the mouth 4a of the cup-shaped body 4 itself, are locally substantially perpendicular to the portion of the lenticular half-shell 3 which covers the mouth 4a of the cup-shaped reflector body 4.

More in detail, in the example shown, the cup-shaped reflector body 4 is preferably made of an opaque plastic material by means of an injection molding process and its inner surface 4i is metallized and mirror-finished so as to completely reflect the incident light.

With reference to figure 2, the lamp 5 is instead preferably inserted into a through hole made at the bottom of the cup-shaped reflector body 4, so that the glass bulb of the lamp may juts out into the cup-shaped reflector body 4.

With reference to figures 1 and 2, the automotive light 1 is additionally provided with at least one set of light emitting diodes 6, traditionally referred to as LEDs, which are fixed to a common support base 7 which, in turn, is fixed within the rear shell 2 with the LEDs 6 facing a corresponding transparent or semitransparent portion of the front lenticular half-shell 3, so as to allow the LEDs 6 to backlight the same transparent or semitransparent portion of the lenticular half-shell 3.

In the example shown, in particular, the automotive light 1 is provided with two sets of LEDs 6, each of which is fixed to a corresponding support base 7 which in turn is fixed within the rear shell 2, with the LEDs 6 facing a corresponding transparent or semitransparent portion of the front lenticular half-shell 3 so as to allow the LEDs 6 to backlight the same transparent or semitransparent portion of the lenticular half-shell 3.

Preferably, though not necessarily, the automotive light 1 additionally comprises a light-guide body 8 made of photoconductive material, which is positioned immediately over the LEDs 6 on the support base 7, and is structured so as to collect the light emitted by the various LEDs 6, and then convey such a light towards specific areas/zones of the portion of the front lenticular half-shell 3 facing the support base 7.

In the example shown, in particular, the guide-light body 8 is preferably made of a transparent plastic material, such as transparent polycarbonate or transparent polymethyl methacrylate by means of an injection molding process.

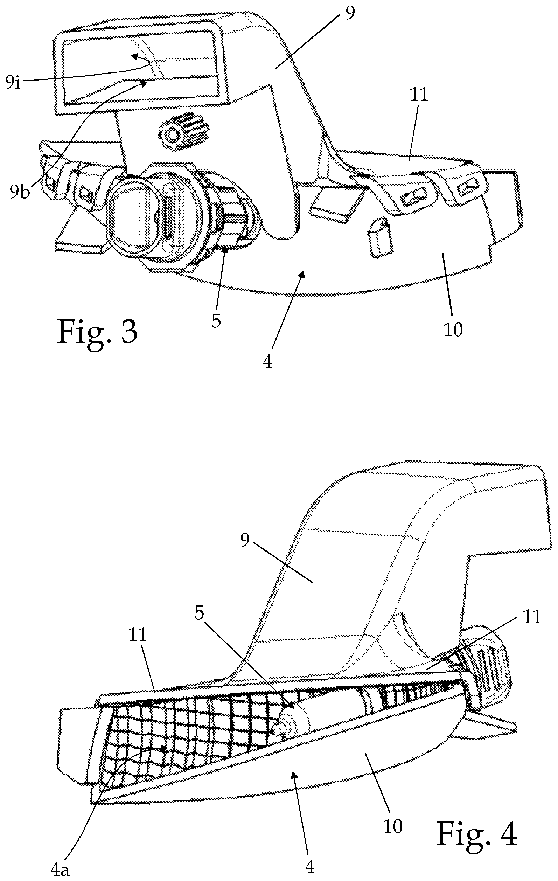

With reference to figures 1, 2, 3 and 4, unlike the current rear automotive lights, the automotive light 1 further comprises a heat extraction duct 9 that juts out from the bottom of the cup-shaped reflector body 4, and extends upwards into the rear shell 2 up to reach an opening 2b made for this purpose at on bottom wall of the rear shell 2.

More in detail, the inlet mouth 9a of the heat extraction duct 9 is arranged immediately above the glass bulb of lamp 5, while the outlet mouth 9b of the extraction duct 9 is preferably located immediately downstream of the opening 2b made at the bottom of the rear shell 2.

In addition to the above description, the passage section of the heat extraction duct 9 is reduced more or less progressively as the distance from the inlet mouth 9a increases, so as to gradually increase the hot air speed flowing along the heat extraction duct 9. Furthermore, the inner surface 9i of the extraction duct 9 is preferably metallized or otherwise mirror-finished so as to reflect the incident light.

With reference to figures 1 and 2, the bottom wall of the rear shell 2 is instead preferably provided with an additional air inlet 2c, though which the air can easily/freely penetrate into the closed cavity delimited by the rear shell 2 and by the front lenticular half-shell 3, to reach the mouth 4a of the cup-shaped reflector body 4.

With reference to figures 1, 2, 3 and 4, in the example shown, in particular, the cup-shaped reflector body 4 is divided into a lower half-shell 10 and an upper half-shell 11 which are structured so as to be reciprocally coupled and stably fastened by means of a series of snap-locking members, and the heat extraction duct 9 is made in one piece with the upper half-shell 11.

More in detail, in the example shown, the two half-shells 10 and 11 which form the cup-shaped reflector body 4 are both preferably made of an opaque plastic material, by means of an injection molding process, and the face of both, which will form the inner surface 4i of the cup-shaped reflector body 4, is completely coated by a silver paint capable of completely reflecting the incident light. Moreover, this silver paint substantially covers the entire inner surface 9i of the extraction duct 9.

With reference to figures 1 and 2, the automotive light 1 is also preferably provided with one or more protective screens 13 which are arranged within the rear shell 2, between the heat extraction duct 9 and the support bases 7, so as to limit the heat transfer by convection and/or radiation to the bases 7 which support the LEDs 6. In the example shown, the protective screens 13 preferably consist of plates made of metal material and/or of heat insulating material partitions.

The general operation of the automotive light 1 is easily inferable from the above description and no further explanations are required.

On the other hand, with regards to the operation of the heat extraction duct 9, experimental tests have indicated that the metallization of the inner surface 4i of the cup-shaped reflecting body 4 and of the inner surface 9i of the heat extraction duct 9, prevents/limits the cooling of the hot air which surrounds the glass bulb of the incandescent lamp 5 thus significantly increasing the flue effect which is triggered by the heat produced by the incandescent lamp 5 in the heat extraction duct 9.

In other words, the air which reaches the bulb of lamp 5 through inlet 4a is heated and then rapidly rises due to the flue effect along the extraction duct 9 without significantly cooling down. The gradually decreasing section of the heat extraction duct 9 allows instead to increase the average speed of the hot air which flows within the extraction duct 9, thus reducing the permanence time of the air within the duct.

Furthermore, the increase of the average speed of the air within the heat extraction duct 9 results in a very high value of the air flow which crosses the cup-shaped body 4.

This implies that, under stationary conditions, the hot air which leaves the cup-shaped body 4 by rapidly flowing through the heat extraction duct 9 takes most the heat produced by lamp 5 out of the automotive light 1. Therefore, the average temperature of the air within the rear light 1 is always maintained within values considerably lower than those measurable within a traditional rear light and compatible with the operation of the LEDs.

The advantages deriving from the particular structure of the automotive light 1 are apparent. By virtue of the presence of the heat extraction duct 9, the LEDs 6 which are inside the automotive light 1 operate in an environment with significantly lower temperatures, and in which a flow of cold air from the outside continuously circulates, which air flow is capable of effectively cooling the LEDs 6 before reaching the inlet 4a of the cup-shaped body 4.

It is finally apparent that changes and variations can be made to the automotive light 1 described herein without departing from the scope of the present invention.

For example, in a more advanced embodiment, the base(s) 7 which support LEDs 6 may be provided with one or more heat sinks made of metal material, which are structured so as to increase the heat transfer from the LEDs 6 to the flow of cold air which enters the automotive light 1 through the air inlet 2c or other openings/gaps present in the rear shell 2.

## Claims

1. Rear automotive light (1) of the type comprising: a substantially basin-shaped, rear shell (2) which is structured so to be fixed onto the vehicle body; a front lenticular half-shell (3) arranged to close the mouth (2a) of the rear shell (2); at least a cup-shaped reflector body (4) which is arranged inside the rear shell (2) with its own mouth (4a) facing towards a first transparent or semitransparent portion of the front lenticular half-shell (3); and a light source (5) which is structured so to emit light when electricity powered, and is arranged within the rear shell (2), close to the bottom of the latter, so as to be able to backlight said first transparent or semitransparent portion of the front lenticular half-shell (3);
the rear automotive light (1) being **characterized in that** it also comprises a heat extraction tubular duct (9) that overhangingly protrudes from the bottom of the cup-shaped reflector body (4), and extends upwards inside the rear shell (2) up to reach an opening (2b) made in the back of the rear shell (2).

2. Rear automotive light according to Claim 1, **characterized in that** the inlet mouth (9a) of the heat extraction duct (9) is arranged immediately above said light source (5).

3. Rear automotive light according to Claim 2, **characterized in that** the light source (5) is an incandescent lamp or similar (5) and that the inlet mouth (9a) of the heat extraction duct (9) is arranged immediately above the bulb of said incandescent lamp or similar (5).

4. Rear automotive light according to any one of the preceding claims, **characterized in that** the outlet mouth (9b) of the heat extraction duct (9) is arranged immediately downstream of the opening (2b) made in the back of the rear shell (2).

5. Rear automotive light according to any one of the preceding claims, **characterized in that** the passage section of the heat extraction duct (9) decreases as the distance from the inlet mouth (9a) of the heat extraction duct (9) increases.

6. Rear automotive light according to any one of the preceding claims, **characterized in that** the inner surface (9i) of the heat extraction duct (9) is mirror finished so as to reflect incident light.

7. Rear automotive light according to any one of the preceding claims, **characterized in that** the inner surface (4i) of the cup-shaped reflector body (4) is mirror finished so as to reflect incident light.

8. Rear automotive light according to any one of the preceding claims, **characterized in that** the back of rear shell (2) is further provided with an air inlet (2c), through which air can penetrate inside the closed cavity delimited by the rear shell (2) and by the front lenticular half-shell (3).

9. Rear automotive light according to any one of the preceding claims, **characterized in that** the cup-shaped reflector body (4) is subdivided into a lower half-shell (10) and an upper half-shell (11) that are structured for being reciprocally coupled, and **in that** the heat extraction duct (9) is made in one piece with the upper half-shell (11).

10. Rear automotive light according to any one of the preceding claims, **characterized by** also comprising at least one set of light-emitting diodes (6) which are located on a supporting board (7) that, in turn, is fixed inside the rear shell (2) with the diodes (6) faced towards a corresponding second transparent or semitransparent portion of the front lenticular half-shell (3).

11. Rear automotive light according to claim 10, **characterized in that** it also comprises a light-guide body (8) made of photoconductive material and which is arranged immediately above the light-emitting diodes (6) placed on the support base (7), and is structured so as to collect the light emitted by the various diodes (6) and then channelling this light to specific areas/zones of the second portion of the front lenticular half-shell (3) .

## Patentansprüche

1. Kraftfahrzeug-Rückleuchte (1) eines Typs, umfassend: eine im Wesentlichen beckenförmige, hintere Schale (2), die so aufgebaut ist, dass sie an einer Fahrzeugkarosserie befestigt werden kann; eine vordere linsenförmige Halbschale (3), die so angeordnet ist, dass sie eine Öffnung (2a) der hinteren Schale (2) verschließt; wenigstens einen becherförmigen Reflektorkörper (4), der innerhalb der hinteren Schale (2) angeordnet ist, wobei seine eigene Öffnung (4a) einem ersten transparenten oder halbtransparenten Abschnitt der vorderen linsenförmigen Halbschale (3) zugewandt ist; und eine Lichtquelle (5), die so aufgebaut ist, dass sie Licht emittiert, wenn sie mit elektrischen Strom betrieben wird, und die innerhalb der hinteren Schale (2) nahe dem Boden der letzteren angeordnet ist, um den ersten transparenten oder halbtransparenten Abschnitt der vorderen linsenförmigen Halbschale (3) hinterleuchten zu können,
wobei die Kraftfahrzeug-Rückleuchte (1) **dadurch gekennzeichnet ist, dass** sie ferner einen röhrenförmigen Wärmeabfuhrkanal (9) umfasst, der vom Boden des becherförmigen Reflektorkörpers (4) überhängend hervorsteht und sich im Inneren der hinteren Schale (2) nach oben bis zu einer Öffnung (2b) erstreckt, die in der Rückseite der hinteren Schale (2) ausgebildet ist.

2. Kraftfahrzeug-Rückleuchte nach Anspruch 1, **dadurch gekennzeichnet, dass** die Einlassöffnung (9a) des Wärmeabfuhrkanals (9) unmittelbar über der Lichtquelle (5) angeordnet ist.

3. Kraftfahrzeug-Rückleuchte nach Anspruch 2, **dadurch gekennzeichnet, dass** die Lichtquelle (5) eine Glühlampe (5) oder dergleichen ist, und dass die Einlassöffnung (9a) des Wärmeabfuhrkanals (9) unmittelbar über dem Kolben der Glühlampe (5) oder dergleichen angeordnet ist.

4. Kraftfahrzeug-Rückleuchte nach einem der vorangehenden Ansprüche, **dadurch gekennzeichnet, dass** die Auslassöffnung (9b) des Wärmeabfuhrkanals (9) unmittelbar stromabwärts der in der Rückseite der hinteren Schale (2) ausgebildeten Öffnung (2b) angeordnet ist.

5. Kraftfahrzeug-Rückleuchte nach einem der vorangehenden Ansprüche, **dadurch gekennzeichnet, dass** der Durchgangsquerschnitt des Wärmeabfuhrkanals (9) mit zunehmendem Abstand von der Einlassmündung (9a) des Wärmeabfuhrkanals (9) abnimmt.

6. Kraftfahrzeug-Rückleuchte nach einem der vorangehenden Ansprüche, **dadurch gekennzeichnet, dass** die Innenoberfläche (9i) des Wärmeabfuhrkanals (9) spiegelblank ausgeführt ist, um einfallendes Licht zu reflektieren.

7. Kraftfahrzeug-Rückleuchte nach einem der vorangehenden Ansprüche, **dadurch gekennzeichnet, dass** die Innenoberfläche (41) des becherförmigen Reflektorkörpers (4) spiegelblank ausgeführt ist, um einfallendes Licht zu reflektieren.

8. Kraftfahrzeug-Rückleuchte nach einem der vorangehenden Ansprüche, **dadurch gekennzeichnet, dass** die Rückseite der hinteren Schale (2) ferner mit einem Lufteinlass (2c) versehen ist, durch welchen Luft in den geschlossenen Hohlraum eindringen kann, der durch die hintere Schale (2) und durch die vordere linsenförmige Halbschale (3) begrenzt ist.

9. Kraftfahrzeug-Rückleuchte nach einem der vorangehenden Ansprüche, **dadurch gekennzeichnet, dass** der becherförmige Reflektorkörper (4) in eine untere Halbschale (10) und eine obere Halbschale (11) unterteilt ist, die so aufgebaut sind, dass sie wechselseitig gekoppelt werden können, und dass der Wärmeabfuhrkanal (9) einstückig mit der oberen Halbschale (11) ausgeführt ist.

10. Kraftfahrzeug-Rückleuchte nach einem der vorangehenden Ansprüche, **dadurch gekennzeichnet, dass** sie ferner wenigstens einen Satz von lichtemittierenden Dioden (6) umfasst, die auf einer Trägerplatte (7) angeordnet sind, die ihrerseits innerhalb der hinteren Schale (2) befestigt ist, wobei die Dioden (6) einem entsprechenden zweiten transparenten oder halbtransparenten Abschnitt der vorderen linsenförmigen Halbschale (3) zugewandt sind.

11. Kraftfahrzeug-Rückleuchte nach Anspruch 10, **dadurch gekennzeichnet, dass** sie ferner einen Lichtleitkörper (8) umfasst, der aus lichtleitendem Material gefertigt ist und unmittelbar über den auf der Trägerplatte (7) platzierten lichtemittierenden Dioden (6) angeordnet ist und so aufgebaut ist, dass er das von den verschiedenen Dioden (6) emittierte Licht sammelt und dann dieses Licht zu bestimmten Bereichen/Zonen des zweiten Abschnitts der vorderen linsenförmigen Halbschale (3) lenkt.

## Revendications

1. Feu arrière d'automobile (1) du type comprenant : une coque arrière sensiblement en forme de cuvette (2) qui est structurée pour être fixée sur la caisse du véhicule; une demi-coque lenticulaire avant (3) agencée pour fermer l'embouchure (2a) de la coque arrière (2) ; au moins un corps réflecteur en forme de coupe (4) qui est agencé à l'intérieur de la coque arrière (2) avec sa propre embouchure (4a) en regard d'une première portion transparente ou semi-transparente de la demi-coque lenticulaire avant (3) ; et une source de lumière (5) qui est structurée pour émettre une lumière lorsqu'elle est alimentée en électricité, et est agencée au sein de la coque arrière (2), près du fond de cette dernière, de façon à être apte à rétroéclairer ladite première portion transparente ou semi-transparente de la demi-coque lenticulaire avant (3) ;
le feu arrière d'automobile (1) étant **caractérisé en ce qu'**il comprend également un conduit tubulaire d'extraction de chaleur (9) qui dépasse en porte-à-faux du fond du corps réflecteur en forme de coupe (4), et s'étend vers le haut à l'intérieur de la coque arrière (2) jusqu'à atteindre une ouverture (2b) pratiquée dans le dos de la coque arrière (2).

2. Feu arrière d'automobile selon la revendication 1, **caractérisé en ce que** l'embouchure d'entrée (9a) du conduit d'extraction de chaleur (9) est agencée immédiatement au-dessus de ladite source de lumière (5).

3. Feu arrière d'automobile selon la revendication 2, **caractérisé en ce que** la source de lumière (5) est une lampe à incandescence ou similaire (5) et **en ce que** l'embouchure d'entrée (9a) du conduit d'extraction de chaleur (9) est agencée immédiatement au-dessus de l'ampoule de ladite lampe à incandescence ou similaire (5).

4. Feu arrière d'automobile selon l'une quelconque des revendications précédentes, **caractérisé en ce que** l'embouchure de sortie (9b) du conduit d'extraction de chaleur (9) est agencée immédiatement en aval de l'ouverture (2b) pratiquée dans le dos de la coque arrière (2).

5. Feu arrière d'automobile selon l'une quelconque des revendications précédentes, **caractérisé en ce que** la section de passage du conduit d'extraction de chaleur (9) diminue à mesure que la distance à l'embouchure d'entrée (9a) du conduit d'extraction de chaleur (9) augmente.

6. Feu arrière d'automobile selon l'une quelconque des revendications précédentes, **caractérisé en ce que** la surface interne (9i) du conduit d'extraction de chaleur (9) a un poli miroir de façon à réfléchir la lumière incidente.

7. Feu arrière d'automobile selon l'une quelconque des revendications précédentes, **caractérisé en ce que** la surface interne (4i) du corps réflecteur en forme de coupe (4) a un poli miroir de façon à réfléchir la lumière incidente.

8. Feu arrière d'automobile selon l'une quelconque des revendications précédentes, **caractérisé en ce que** le dos de la coque arrière (2) est en outre pourvu d'une entrée d'air (2c), à travers laquelle de l'air peut pénétrer à l'intérieur de la cavité fermée délimitée par la coque arrière (2) et par la demi-coque lenticulaire avant (3).

9. Feu arrière d'automobile selon l'une quelconque des revendications précédentes, **caractérisé en ce que** le corps réflecteur en forme de coupe (4) est subdivisé en une demi-coque inférieure (10) et une demi-coque supérieure (11) qui sont structurées pour être couplées réciproquement, et **en ce que** le conduit d'extraction de chaleur (9) est réalisé d'un seul tenant avec la demi-coque supérieure (11).

10. Feu arrière d'automobile selon l'une quelconque des revendications précédentes, **caractérisé en ce qu'**il comprend également au moins un jeu de diodes électroluminescentes (6) qui sont situées sur une planche de support (7) qui, elle-même est fixée à l'intérieur de la coque arrière (2) avec les diodes (6) en regard d'une deuxième portion transparente ou semi-transparente correspondante de la demi-coque lenticulaire avant (3).

11. Feu arrière d'automobile selon la revendication 10, **caractérisé en ce qu'**il comprend également un corps guide-lumière (8) constitué d'un matériau photoconducteur et qui est agencé immédiatement au-dessus des diodes électroluminescentes (6) placées sur la base de support (7), et est structuré de façon à collecter la lumière émise par les diverses diodes (6) puis à canaliser cette lumière vers des aires/zones spécifiques de la deuxième portion de la demi-coque lenticulaire avant (3).
